# FASCICULE DE BREVET EUROPEEN

(11) **EP 2 727 744 B1**
(45) Date de publication et mention de la délivrance du brevet: **06.07.2016**
(21) Numéro de dépôt: 14152873.7
(22) Date de dépôt: 01.08.2005
(51) Int. Cl.: B60C 9/00, D07B 1/06

(54) **Câble d'acier multi-torons pour pneumatique**
Stahlseil mit mehreren Litzen für Luftreifen
Multi-strand steel cord for pneumatic tire

(30) Priorité: 02.08.2004 FR 0408553
(43) Date de publication de la demande: 07.05.2014
(62) Demande divisionnaire de: 05771421.4
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: Barguet, Henri, 63040 CLERMONT-FERRAND CEDEX 9 (FR); Chauvin, Brigitte, 63040 CLERMONT-FERRAND CEDEX 9 (FR); Domingo, Alain, 63040 CLERMONT-FERRAND CEDEX 9 (FR); Vo, Le Tu Anh, 63040 CLERMONT-FERRAND CEDEX 9 (FR)
(74) Mandataire: Desbordes, Guillaume

(56) Documents cités:
- EP-A2- 1 293 600
- JP-A- H1 193 087
- US-A- 4 197 695
- US-A- 4 534 162
- US-A1- 2004 045 652

## Description

La présente invention est relative aux câbles d'acier multi-torons comprenant une structure incorporant au moins, en tant que toron élémentaire, un câble en acier compact à deux couches, de construction 1+N, utilisables notamment pour le renforcement d'articles en caoutchouc.

Elle se rapporte également aux pneumatiques et aux armatures de renforcement du sommet, encore appelées « ceintures », de ces pneumatiques, en particulier au renforcement des ceintures de pneumatiques pour véhicules industriels lourds.

Un pneumatique à armature de carcasse radiale, de manière connue, comporte une bande de roulement, deux bourrelets inextensibles, deux flancs reliant les bourrelets à la bande de roulement et une ceinture disposée circonférentiellement entre l'armature de carcasse et la bande de roulement, cette ceinture étant constituée de diverses nappes (ou "couches") de caoutchouc renforcées ou non par des éléments de renforcement ("renforts") tels que des câblés ou des monofilaments, du type métalliques ou textiles.

La ceinture de pneumatique est généralement constituée d'au moins deux nappes de ceinture superposées, dites parfois nappes "de travail" ou nappes "croisées", dont les câbles de renforcement, en général métalliques, sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 10° et 45° selon le type de pneu considéré. Les nappes croisées peuvent être complétées par diverses autres nappes ou couches de caoutchouc auxiliaires, de largeurs variables selon les cas, comportant ou non des renforts ; on citera à titre d'exemple de simples coussins de gomme, des nappes dites "de protection" chargées de protéger le reste de la ceinture des agressions externes, des perforations, ou encore des nappes dites "de frettage" comportant des renforts orientés sensiblement selon la direction circonférentielle (nappes dites "à zéro degré"), qu'elles soient radialement externes ou internes par rapport aux nappes croisées.

Une ceinture de pneumatique doit satisfaire de manière connue à différentes exigences, souvent contradictoires, notamment :
- être la plus rigide possible à faible déformation, car elle contribue d'une manière substantielle à rigidifier le sommet du pneumatique ;
- avoir une hystérèse aussi basse que possible, pour d'une part minimiser l'échauffement en roulage de la zone interne du sommet et d'autre part réduire la résistance au roulement du pneumatique, synonyme d'économie de carburant ;
- posséder enfin une endurance élevée, vis-à-vis en particulier du phénomène de séparation, fissuration des extrémités des nappes croisées dans la zone d'épaule du pneumatique, connu sous le terme de "clivage", ce qui exige notamment des câbles métalliques qui renforcent les nappes de ceinture de présenter une résistance élevée à la fatigue en compression, le tout dans une atmosphère plus ou moins corrosive.

La troisième exigence est particulièrement forte pour les enveloppes de pneumatiques Poids lourd, conçues pour pouvoir être rechapées une ou plusieurs fois lorsque les bandes de roulement qu'elles comportent atteignent un degré d'usure critique après un roulage prolongé.

Pour le renforcement des ceintures ci-dessus, on utilise généralement des câbles d'acier ("*steel cords*") dits "à couches" (*"layered cords"*) constitués d'une âme centrale et d'une ou plusieurs couches de fils concentriques disposées autour de cette âme. Les câbles à couches les plus utilisés sont essentiellement des câbles de construction M+N ou M+N+P, formés de manière connue d'une âme de M fil(s) entourée d'au moins une couche de N fils éventuellement elle-même entourée d'une couche externe de P fils.

US 2004/045652 A1 divulgue un câble d'acier multi-torons comprenant une structure incorporant au moins, en tant que toron élémentaire (toron central), un câble en acier compact à deux couches de construction 1+N comportant un noyau ou couche interne comportant un fil d'âme unique, et une couche externe saturée de six fils disposés autour de la couche interne. Le toron central est entouré d'une gaine polymérique qui remplit, au moins en partie, les interstices entre ledit toron central et les 6 torons externes.

La disponibilité en aciers au carbone de plus en plus résistants et endurants, notamment, fait que les manufacturiers de pneumatiques s'orientent aujourd'hui, autant que possible, vers l'emploi de câbles ayant seulement deux couches, afin notamment de simplifier la fabrication de ces câbles, diminuer l'épaisseur des nappes composites de renforcement, en fin de compte diminuer les coûts des pneumatiques eux-mêmes.

Les câbles à deux couches essentiellement utilisés jusqu'ici dans les ceintures de pneumatiques sont essentiellement des câbles de construction 2+7, 3+8 et 3+9, constitués d'une âme ou noyau de 2 ou 3 fils et d'une couche externe de N fils (respectivement 7, 8 ou 9 fils) qui est plus ou moins désaturée grâce au diamètre élevé du noyau apporté par la présence des deux ou trois fils d'âme.

Ce type de construction favorise, on le sait, la pénétrabilité externe du câble par la gomme de calandrage du pneumatique ou de l'article en caoutchouc lors de la cuisson de ce dernier, par voie de conséquence permet d'améliorer l'endurance des câbles à couches en fatigue et fatigue-corrosion, particulièrement vis-à-vis du problème de clivage évoqué précédemment.

Ces câbles 2+7, 3+8 et 3+9 ne sont toutefois pas dépourvus d'inconvénients.

Les câbles de construction 3+8 et 3+9 ne sont pas pénétrables jusqu'à coeur à cause de la présence d'un canal ou capillaire au centre des trois fils d'âme, qui reste vide après imprégnation par le caoutchouc, et donc propice à la propagation de milieux corrosifs tels que l'eau. Quant aux câbles 2+7, comme d'ailleurs les précédents, ils restent relativement encombrants pour une résistance faible par unité de section en raison de leur couche externe désaturée.

Par ailleurs, un objectif majeur d'un manufacturier de pneumatiques voulant réduire l'hystérèse des ceintures de pneumatiques est aujourd'hui de diminuer l'épaisseur des tissus de renforcement composites utilisés dans ces ceintures, notamment grâce à l'emploi de câbles à forte compacité.

Poursuivant leurs recherches, les Demanderesses ont découvert un câble à couches nouveau, de construction 1+N, gommé in situ, qui non seulement possède une résistance augmentée à la corrosion, mais encore et surtout offre aux ceintures des pneumatiques une endurance améliorée en compression. La longévité des pneumatiques et celle de leurs armatures de sommet sont ainsi notablement améliorées, tout particulièrement vis-à-vis du phénomène de clivage précédemment exposé.

En conséquence, un premier objet de l'invention est un câble d'acier multi-torons comprenant une structure incorporant au moins, en tant que toron élémentaire, un câble en acier compact à deux couches (C1, C2) de construction 1+N, utilisable notamment comme élément de renforcement d'une ceinture de pneumatique pour véhicule industriel lourd, comportant un noyau ou couche interne (C1) comportant un fil d'âme unique de diamètre d₁, et une couche externe (C2) saturée de N fils de diamètre d₂ enroulés ensemble en hélice selon un pas p₂ autour de la couche C1, ledit câble à couches étant caractérisé :
- en ce qu'il présente les caractéristiques suivantes (d₁, d₂, p₂ en mm) :
   - 0,15 <d₁ < 0,50;
   - 0,15 < d₂ < 0,50;
   - 8 < p₂ < 25 ;
- et en ce que le fil d'âme est entouré d'une gaine de caoutchouc diénique qui remplit, au moins en partie, les interstices entre le fil d'âme et les fils de la couche C2.

Le câble conforme à l'invention peut être utilisé pour le renforcement d'articles ou de produits semi-finis en caoutchouc, par exemple des nappes, des tuyaux, des courroies, des bandes transporteuses, des pneumatiques.

Le câble de l'invention est tout particulièrement destiné à être utilisé comme élément de renforcement d'une ceinture de pneumatique destiné à des véhicules industriels lourds choisis parmi camionnettes, véhicules "Poids lourd" - i.e., métro, bus, engins de transport routier (camions, tracteurs, remorques), véhicules hors-la-route -, engins agricoles ou de génie civil, avions, autres véhicules de transport ou de manutention.

Le câble de l'invention pourrait toutefois être utilisé, selon d'autres modes de réalisation possibles de l'invention, pour renforcer d'autres parties des pneumatiques, notamment des armatures de carcasse de pneumatiques pour véhicules industriels tels que Poids lourd.

D'autres articles ou produits semi-finis en caoutchouc peuvent eux-mêmes être renforcés par un câble conforme à l'invention, en particulier les pneumatiques destinés aux véhicules industriels tels que Poids lourd.

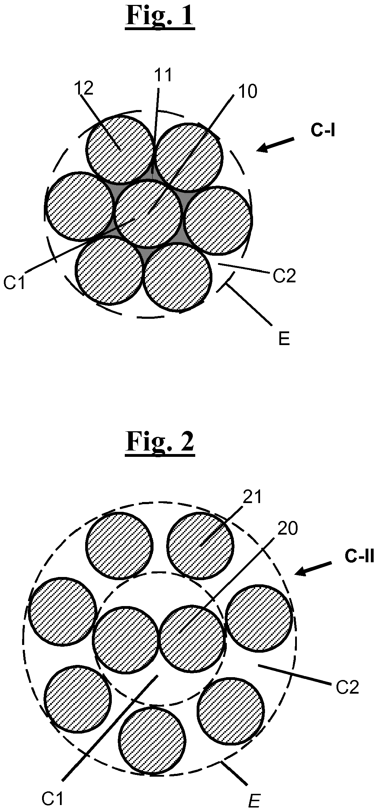

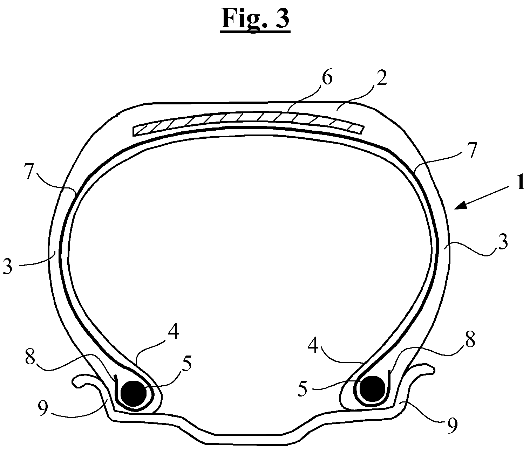

L'invention ainsi que ses avantages seront aisément compris à la lumière de la description et des exemples de réalisation qui suivent, ainsi que des figures 1 à 3 relatives à ces exemples qui schématisent, respectivement :
- en coupe transversale, un câble de construction 1+6 conforme à l'invention, utilisable dans une armature de sommet d'un pneumatique Poids lourd conforme à l'invention (Fig. 1);
- en coupe transversale, un câble de construction 2+7 utilisable dans une armature de sommet conventionnelle d'un pneumatique Poids lourd (Fig. 2);
- en coupe radiale, une enveloppe de pneumatique Poids lourd à armature de carcasse radiale, conforme ou non à l'invention dans cette représentation générale (Fig. 3).

### I. MESURES ET TESTS

### 1-1. Mesures dynamométriques

Pour ce qui concerne les fils et câbles métalliques, les mesures de force à la rupture notée Fm (charge maximale en N), de résistance à la rupture notée Rm (en MPa) et d'allongement à la rupture noté At (allongement total en %) sont effectuées en traction selon la norme ISO 6892 de 1984.

Pour ce qui concerne les compositions de caoutchouc, les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté E10 et exprimé en MPa (conditions normales de température et d'hygrométrie selon la norme ASTM D 1349 de 1999).

### 1-2. Test de perméabilité à l'air

Le test de perméabilité à l'air constitue un moyen simple de mesure indirecte du taux de pénétration du câble par une composition de caoutchouc. Il est réalisé sur des câbles extraits directement, par décorticage, des nappes de caoutchouc vulcanisées qu'ils renforcent, donc pénétrés par le caoutchouc cuit.

Le test est réalisé sur une longueur de câble déterminée (par exemple 2 cm) de la manière suivante: on envoie de l'air à l'entrée du câble, sous une pression donnée (par exemple 1 bar), et on mesure le volume d'air à la sortie, à l'aide d'un débitmètre ; pendant la mesure l'échantillon de câble est bloqué dans un joint étanche de telle manière que seule la quantité d'air traversant le câble d'une extrémité à l'autre, selon son axe longitudinal, est prise en compte par la mesure. Le débit mesuré est d'autant plus faible que le taux de pénétration du câble par le caoutchouc est plus élevé.

### II. DESCRIPTION DETAILLEE DE L'INVENTION

Dans la présente description, sauf indication expresse différente, tous les pourcentages (%) indiqués sont des % massiques.

### II-1. Câble de l'invention

Le câble métallique compact à deux couches (C1, C2) selon l'invention, de construction 1+N, comporte un noyau ou couche interne C1 comportant un fil d'âme unique de diamètre d₁, et une couche externe C2 saturée de N fils de diamètre d₂ enroulés ensemble en hélice selon un pas p₂ autour de la couche C1, ledit câble à couches étant caractérisé :
- en ce qu'il présente les caractéristiques suivantes (d₁, d₂, p₂ en mm) :
   - 0,15 <d₁ < 0,50;
   - 0,15 < d₂ < 0,50;
   - 8 < p₂ < 25 ;
- et en ce que le fil d'âme est entouré d'une gaine de caoutchouc diénique qui remplit, au moins en partie, les interstices entre le fil d'âme et les fils de la couche C2.

En d'autres termes, le câble de l'invention est gommé intérieurement (i.e., rempli au moins en partie de gomme ou encore "gommé in situ") : son fil d'âme et sa couche C2 sont séparés radialement par une épaisseur (ou gaine) minimale de gomme (composition d'élastomère diénique), ladite gomme de gainage remplissant en outre, en tout ou partie, les interstices entre fil d'âme et fils de la couche C2.

Sauf revêtement (*coating*) ultérieur éventuel par du caoutchouc ou autre polymère, le câble de l'invention est donc, en tant que tel, dépourvu de gomme ou toute autre gaine de polymère à sa périphérie (i.e., autour des N fils constituant sa couche externe C2), tel qu'il est représenté par exemple à la figure 1 annexée.

Par ailleurs, par câble "compact", doit être entendu ici, de manière connue de l'homme du métier, un câble dont la compacité est telle que ce câble ne peut pas être pénétré de l'extérieur par une matière de polymère, particulièrement de la gomme, même à l'état cru.

Les fils des couches C1 et C2 peuvent avoir un diamètre identique ou différent d'une couche à l'autre. On utilise de préférence des fils de même diamètre d'une couche à l'autre (soit d₁ = d₂), comme schématisé par exemple sur la Fig. 1 annexée. Le fil de la couche C1 est préférentiellement en acier, plus préférentiellement en acier au carbone. Indépendamment, les fils de la couche C2 sont eux-mêmes en acier, de préférence en acier au carbone.

Selon un mode préférentiel, la couche C2 comporte de 5 à 10 fils, en d'autres termes le câble de l'invention est choisi dans le groupe des câbles de constructions 1+5, 1+6, 1+7, 1+8, 1+9 et 1+10 ; sont particulièrement sélectionnés parmi ces câbles ceux constitués de fils ayant sensiblement le même diamètre d'une couche à l'autre (soit d₁ = d₂).

Selon un mode plus préférentiel de réalisation l'invention, le câble sélectionné a pour construction 1+6 ou 1+7, plus particulièrement 1+6.

La Fig. 1 schématise, en coupe perpendiculaire à l'axe du câble (supposé rectiligne et au repos), un exemple d'un câble préférentiel 1+6 (câble noté C-I dans les exemples qui suivent), alors que la Fig. 2 rappelle la coupe d'un câble conventionnel 2+7 (câble noté C-II dans les exemples qui suivent).

Le câble selon l'invention comporte d'abord une couche interne (ou noyau) C1 constituée du fil d'âme 10 recouvert, de préférence sur toute sa périphérie, d'une épaisseur minimale de gomme de gainage 11, de préférence comprise entre 0,01 et 0,10 mm, plus préférentiellement encore comprise dans un domaine de 0,02 à 0,06 mm, ce qui est donc inférieur, généralement très inférieur, au diamètre dudit fil d'âme.

La gaine de caoutchouc 11 du câble de l'invention s'étend d'une manière continue autour dudit fil d'âme 10 qu'elle recouvre, c'est-à-dire que cette gaine est continue dans la direction "orthoradiale" du câble (perpendiculaire à son rayon). En d'autres termes, compte tenu de la plage de variation du diamètre d₁, la couche C1 constituée du fil d'âme et de l'épaisseur minimale de gomme de gainage qui l'entoure, a un diamètre préférentiel compris entre 0,16 mm et 0,60 mm, plus préférentiellement compris dans un domaine de 0,17 à 0,56 mm.

La couche C1 est elle-même entourée et au contact d'une couche externe C2 de six fils 12 (de même diamètre que le fil d'âme 10) enroulés ensemble en hélice selon un pas p₂ autour de la couche C1, et donc d'épaisseur sensiblement égale au diamètre d₂ desdits fils 12. On voit bien que les fils 10 et 12 sont ainsi disposés selon deux couches adjacentes et concentriques, tubulaires (couches C1 et C2), donnant au câble son contour *E* cylindrique.

Pour comparaison, dans le câble C-II selon l'art antérieur, la couche interne C1 est formée de deux fils 20 enroulés ensemble en hélice selon un pas p₁, elle-même entourée et au contact d'une couche externe C2 de sept fils 21 enroulés ensemble en hélice selon un pas p₂ autour de la couche C1, et donc d'épaisseur sensiblement égale au diamètre d₂ desdits fils. Les fils 20 et 21 sont ainsi disposés eux aussi selon deux couches adjacentes et concentriques, tubulaires (couches C1 et C2), donnant au câble son contour E cylindrique.

La gaine de caoutchouc 11 recouvre le fil d'âme 10 du câble de l'invention, mais aussi remplit, au moins en partie, les interstices entre le fil d'âme 10 et les fils 12 de la couche C2.

Selon un mode particulièrement préférentiel, ces interstices sont totalement remplis par la gomme de gainage 11, comme représenté à la Fig. 1, ladite gomme de gainage 11 recouvrant ainsi pratiquement au moins la demi-circonférence radialement intérieure des fils 12 de la couche C2.

Selon un mode préférentiel de réalisation de l'invention, les caractéristiques suivantes sont vérifiées (d₁, d₂ en mm) :
- 0,15 < d₁ < 0,50;
- 0,25 < d₂ < 0,40 ;
- 0,6 < (d₁/d₂) < 1,25.

Selon un mode plus préférentiel, les caractéristiques suivantes sont vérifiées (d₁, d₂ en mm) :
- 0,20 < d₁ < 0,48 ;
- 0,25 < d₂ < 0,40 ;
- 0,8 < (d₁ / d₂) < 1,2.

La couche C1 a ainsi, dans ce dernier cas, un diamètre préférentiel compris entre 0,21 mm et 58 mm (plus préférentiellement compris dans un domaine de 0,22 à 0,54 mm).

Pour un compromis optimisé entre résistance, faisabilité, rigidité et endurance en compression du câble, on préfère que les diamètres de tous les fils des couches C1 et C2, que ces fils aient un diamètre identique ou non, soient compris dans un domaine d'environ 0,26 à 0,36 mm, la couche C1 ayant donc dans ce cas un diamètre préférentiel compris dans un domaine d'environ 0,27 à 0,46 mm (plus préférentiellement de 0,28 à 0,42 mm).

Le pas p₂ est choisi plus préférentiellement entre 10 et 20 mm, en particulier lorsque d₁ = d₂, plus préférentiellement encore dans un domaine de 14 à 18 mm.

On rappelle ici que de manière connue le pas « p » représente la longueur, mesurée parallèlement à l'axe du câble, au bout de laquelle un fil ayant ce pas effectue un tour complet autour dudit axe du câble.

Par câble métallique, on entend par définition un câble formé de fils constitués majoritairement (c'est-à-dire pour plus de 50% de ces fils) ou intégralement (pour 100% des fils) d'un matériau métallique. L'invention est préférentiellement mise en oeuvre avec un câble en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages.

Lorsqu'un acier au carbone est utilisé, sa teneur en carbone est de préférence comprise entre 0,4% et 1,2%, notamment entre 0,5% et 1,1%. Elle est plus préférentiellement comprise entre 0,6% et 1,0% (% en poids d'acier), une telle teneur représentant un bon compromis entre les propriétés mécaniques requises pour le composite et la faisabilité des fils.

Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement.

Selon un mode de réalisation préférentiel, l'acier utilisé est recouvert d'une couche de laiton (alliage Zn-Cu) ou de zinc ; on rappelle que lors du procédé de fabrication des fils, le revêtement de laiton ou de zinc facilite le tréfilage du fil, ainsi que le collage du fil avec le caoutchouc. Mais les fils pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

Les câbles de l'invention sont préférentiellement en acier au carbone et possèdent une résistance en traction (Rm) de préférence supérieure à 2500 MPa, plus préférentiellement supérieure à 3000 MPa.

L'allongement total à la rupture (At) du câble, somme de ses allongements structural, élastique et plastique (At = As + Ae + Ap), est de préférence supérieur à 2,5%, plus préférentiellement supérieur à 3,0%.

L'homme du métier sait comment fabriquer des fils d'acier conduisant à de telles caractéristiques, en ajustant notamment la composition de l'acier et les taux d'écrouissage final de ces fils, en fonction de ses besoins propres particuliers, en utilisant par exemple des aciers au carbone micro-alliés contenant des éléments d'addition spécifiques tels que Cr, Ni, Co, V, ou divers autres éléments connus (voir par exemple *Research Disclosure* 34984 - "*Micro-alloyed steel cord constructions for tyres" -* mai 1993 ; *Research Disclosure* 34054 - *"High tensile strength steel cord constructions for tyres* "- août 1992).

Le câble de l'invention comporte donc autour de son fil d'âme une matrice ou composition de caoutchouc (dite "gomme de gainage") comportant au moins un élastomère diénique.

L'élastomère diénique est de préférence choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères. De tels copolymères sont plus préférentiellement choisis dans le groupe constitué par les copolymères de butadiène-styrène (SBR), que ces derniers soient préparés par polymérisation en émulsion (ESBR) comme en solution (SSBR), les copolymères d'isoprène-butadiène (BIR), les copolymères d'isoprène-styrène (SIR) et les copolymères d'isoprène-butadiène-styrène (SBIR).

Un mode de réalisation préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon d'autres modes de réalisation préférentiels, l'élastomère diénique peut être constitué, en tout ou partie, d'un autre élastomère diénique tel que, par exemple, un élastomère SBR utilisé en coupage ou non avec un autre élastomère, par exemple du type BR.

La gomme de gainage peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères.

La gomme de gainage est du type réticulable ou réticulée, c'est-à-dire qu'elle comprend par définition un système de réticulation adapté pour permettre la réticulation de la composition lors de sa cuisson (i.e., son durcissement). De préférence, le système de réticulation de la gaine de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, plus préférentiellement compris entre 1 et 8 pce, l'accélérateur primaire de vulcanisation, par exemple un sulfénamide, est utilisé à un taux préférentiel compris entre 0,5 et 10 pce, plus préférentiellement compris entre 0,5 et 5,0 pce.

La gomme de gainage peut comporter également, outre ledit système de réticulation, tout ou partie des additifs habituellement utilisés dans les matrices de caoutchouc destinées à la fabrication de pneumatiques, tels que par exemple des charges renforçantes comme le noir de carbone ou des charges inorganiques comme la silice, des agents de couplage, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE, des résines plastifiantes à haute Tg supérieure à 30°C, des agents facilitant la mise en oeuvre (processabilité) des compositions à l'état cru, des résines tackifiantes, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt ou de nickel.

Le taux de charge renforçante, par exemple du noir de carbone ou une charge inorganique renforçante telle que silice, est de préférence supérieur à 50 pce, par exemple compris entre 60 et 140 pce. Il est plus préférentiellement supérieur à 70 pce, par exemple compris entre 70 et 120 pce.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme charges inorganiques renforçantes conviennent notamment des charges minérales du type silice (SiO₂), notamment les silice précipitées ou pyrogénées présentant une surface BET inférieure à 450 m²/g, de préférence de 30 à 400 m²/g.

L'homme de l'art saura, à la lumière de la présente description, ajuster la formulation de la gomme de gainage afin d'atteindre les niveaux de propriétés (notamment module d'élasticité) souhaités, et adapter la formulation à l'application spécifique envisagée.

A titre préférentiel, la formulation de la gomme de gainage est choisie identique à la formulation de la matrice de caoutchouc que les câbles de l'invention sont destinés à renforcer. Ainsi, il n'y a aucun problème de compatibilité entre les matériaux respectifs de la gomme de gainage et de ladite matrice de caoutchouc que le câble de l'invention est destiné à renforcer.

De préférence, la gomme de gainage présente, à l'état réticulé, un module sécant en extension E10 (à 10% d'allongement) compris entre 5 et 25 MPa, plus préférentiellement entre 5 et 20 MPa, en particulier compris dans un domaine de 7 à 15 MPa.

Le câble selon l'invention peut être fabriqué selon différentes techniques connues de l'homme du métier, par exemple :
- (i) tout d'abord par gainage, via une tête d'extrusion, du fil d'âme (10) avec la gomme de gainage (11) à l'état cru, suivi
- (ii) d'une opération finale de câblage, de préférence en ligne avec la précédente, des N fils (12) de la couche C2 autour de la couche C1 ainsi gommée, opération au cours de laquelle les N fils vont venir s'appuyer sur, s'incruster dans la gomme de gainage crue, cette dernière ayant alors naturellement tendance à remplir, au moins en partie, de préférence totalement les interstices laissés vides entre le fil d'âme (10) et les fils (12) au cours de la mise en place de la couche C2 sous la pression exercée par ces derniers sur la gomme de gainage.

L'invention concerne bien entendu la câble précédemment décrit tant, tant à l'état cru (sa gomme de gainage étant alors non vulcanisée) qu'à l'état cuit (sa gomme de gainage étant alors vulcanisée).

### II-2. Pneumatique de l'invention

Le câble de l'invention est avantageusement utilisable dans les armatures de sommet de tous types de pneumatiques, en particulier de pneumatiques pour véhicules lourds tels que Poids-lourd.

A titre d'exemple, la Fig. 3 représente de manière schématique une coupe radiale d'un pneumatique à armature de sommet métallique pouvant être conforme ou non à l'invention, dans cette représentation générale. Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Le pneumatique conforme à l'invention est caractérisé en ce que sa ceinture 6 comporte au moins, à titre de renforcement d'au moins une des nappes de ceinture, un câble métallique à deux couches conforme à l'invention. Dans cette ceinture 6 schématisée de manière très simple sur la Fig. 3, on comprendra que les câbles de l'invention peuvent par exemple renforcer tout ou partie des nappes de ceinture dites de travail, ou des nappes (ou demi-nappes) dites de triangulation et/ou des nappes dites de protection, lorsque de telles nappes de triangulation ou de protection sont utilisées dans la ceinture 6. Outre les nappes de travail, celles de triangulation et/ou de protection, la ceinture 6 du pneumatique de l'invention peut bien entendu comporter d'autres nappes, par exemple une ou plusieurs nappes dites de frettage.

Bien entendu, ce pneumatique 1 comporte en outre de manière connue une couche de gomme ou élastomère intérieure (communément appelée "gomme intérieure") qui définit la face radialement interne du pneumatique et qui est destinée à protéger la nappe de carcasse de la diffusion d'air provenant de l'espace intérieur au pneumatique. Avantageusement, en particulier dans le cas d'un pneumatique pour véhicule Poids-lourd, il peut comporter en outre une couche élastomère intermédiaire de renfort qui est située entre la nappe de carcasse et la couche intérieure, destinée à renforcer la couche intérieure et, par conséquent, la nappe de carcasse, également destinée à délocaliser partiellement les efforts subis par l'armature de carcasse.

Dans cette nappe de ceinture, la densité des câbles conformes à l'invention est de préférence comprise entre 15 et 80 câbles par dm (décimètre) de nappe de ceinture, plus préférentiellement entre 35 et 65 câbles par dm de nappe, la distance entre deux câbles adjacents, d'axe en axe, étant de préférence comprise environ entre 1,2 et 6,5 mm, plus préférentiellement comprise environ entre 1,5 et 3,0 mm.

Les câbles conformes à l'invention sont de préférence disposés de telle manière que la largeur (notée L) du pont de caoutchouc, entre deux câbles adjacents, est comprise entre 0,5 et 2,0 mm. Cette largeur L représente de manière connue la différence entre le pas de calandrage (pas de pose du câble dans le tissu de caoutchouc) et le diamètre du câble. En dessous de la valeur minimale indiquée, le pont de caoutchouc, trop étroit, risque de se dégrader mécaniquement lors du travail de la nappe, notamment au cours des déformations subies dans son propre plan par extension ou cisaillement. Au-delà du maximum indiqué, on s'expose à des risques d'apparition de pénétration d'objets, par perforation, entre les câbles. Plus préférentiellement, pour ces mêmes raisons, la largeur L est choisie comprise entre 0,8 et 1,6 mm.

De préférence, la composition de caoutchouc utilisée pour le tissu de la nappe de ceinture présente, à l'état vulcanisé (i.e., après cuisson), un module sécant en extension E10 qui est compris entre 5 et 25 MPa, plus préférentiellement entre 5 et 20 MPa, notamment dans un domaine de 7 à 15 MPa, lorsque ce tissu est destiné à former une nappe de travail de la ceinture. C'est dans de tels domaines de modules que l'on a enregistré le meilleur compromis d'endurance entre les câbles de l'invention d'une part, les tissus renforcés de ces câbles d'autre part.

### III. EXEMPLES DE REALISATION DE L'INVENTION

### III-1. Nature et propriétés des fils utilisés

On utilise dans les essais qui suivent des câbles à couches de constructions 1+6 et 2+7 telles que schématisées aux Fig. 1 et 2, constitués de fils fins en acier au carbone revêtus de laiton.

Les fils en acier au carbone sont préparés de manière connue, en partant par exemple de fils machine (diamètre 5 à 6 mm) que l'on écrouit tout d'abord, par laminage et/ou tréfilage, jusqu'à un diamètre intermédiaire voisin de 1 mm.

L'acier utilisé pour le câble C-I (Fils notés "F-I") conforme à l'invention est un acier au carbone du type à très haute résistance (dit SHT pour " *Super High Tensile*") dont la teneur en carbone est de 0,92% environ, comportant 0,2% de chrome environ, le reste étant constitué de fer et des impuretés inévitables habituelles liées au procédé de fabrication de l'acier.

Celui utilisé pour le câble témoin C-II (Fils notés "F-II") un acier au carbone du type à haute résistance (dit HT pour *"High Tensile*") dont la teneur en carbone est de 0,82% environ, comportant 0,5% de manganèse environ (reste constitué de fer et des impuretés).

Les fils de diamètre intermédiaire subissent un traitement de dégraissage et/ou décapage, avant leur transformation ultérieure. Après dépôt d'un revêtement de laiton sur ces fils intermédiaires, on effectue sur chaque fil un écrouissage dit "final" (i.e., après le dernier traitement thermique de patentage), par tréfilage à froid en milieu humide avec un lubrifiant de tréfilage qui se présente par exemple sous forme d'une émulsion ou d'une dispersion aqueuses.

Les fils en acier ainsi tréfilés ont le diamètre et les propriétés mécaniques suivantes :

**Tableau 1**

| Fils | φ (mm) | Fm (N) | Rm (MPa) |
|---|---|---|---|
| F-I | 0,350 | 263 | 2765 |
| F-II | 0,260 | 180 | 3380 |

Le revêtement de laiton qui entoure les fils a une épaisseur très faible, nettement inférieure au micromètre, par exemple de l'ordre de 0,15 à 0,30 µm, ce qui est négligeable par rapport au diamètre des fils en acier. Bien entendu, la composition de l'acier du fil en ses différents éléments (par exemple C, Cr, Mn) est la même que celle de l'acier du fil de départ.

### III-2. Réalisation des câbles

Ces fils sont ensuite assemblés sous forme de différents câbles à couches cylindriques, référencés C-I et C-II, dont la construction et les propriétés mécaniques sont données dans le tableau 2.

**Tableau 2**

| Câble | Construction | p₁ (mm) | p₂ (mm) | Fm (daN) | Rm (MPa) | At (%) |
|---|---|---|---|---|---|---|
| C-I | (1+6) 0,26 SHT | ∞ | 15.4 | 125 | 3315 | 2.7 |
| C-II | (2+7) 0,35 HT | 7.7 | 15.4 | 220 | 2560 | |

Le câble 1+6, tel que schématisé à la Fig. 1, est donc formé de 7 fils F-I au total. Il comporte un noyau C1 comportant le fil d'âme gainé de caoutchouc (déposé via une tête d'extrusion, avant mise en place des fils de la couche C2), cette couche C1 étant au contact d'une couche externe cylindrique de 6 fils eux-mêmes enroulés ensemble en hélice (direction S) autour de l'âme, selon le pas p₂. La gaine de caoutchouc remplit ici la totalité ou quasi-totalité des interstices entre le fil d'âme et les fils de la couche C2. On voit bien que ce câble de l'invention est du type compact, c'est-à-dire que sa couche C2 est non pénétrable de l'extérieur par de la gomme, même à l'état cru (non réticulé).

Le câble témoin 2+7, tel que schématisé à la Fig. 2, est formé de 9 fils F-II au total. Il comporte une couche interne C1 de 2 fils enroulés ensemble en hélice (direction S) selon le pas p₁, cette couche C1 étant au contact d'une couche externe cylindrique de 7 fils eux-mêmes enroulés ensemble en hélice (direction S) autour de l'âme, selon le pas p₂. Ce câble, très aéré et de faible compacité comparativement au câble C-I de l'invention, est dépourvu de gomme.

La composition élastomérique (à base de caoutchouc naturel et de noir de carbone) constituant la gomme de gainage du câble de l'invention a la même formulation que celle de la nappe de caoutchouc de ceinture que le câble C-I est destiné à renforcer dans l'essai qui suit.

### III-3. Endurance en pneumatique

Les câbles à couches C-I et C-II sont ensuite incorporés par calandrage à des tissus composites formés d'une composition connue à base de caoutchouc naturel et de noir de carbone à titre de charge renforçante, utilisée conventionnellement pour la fabrication des nappes de ceinture de pneumatiques Poids-lourd radiaux. Cette composition comporte essentiellement, en plus de l'élastomère et de la charge renforçante (noir de carbone), un antioxydant, de l'acide stéarique, une huile d'extension, du naphténate de cobalt en tant que promoteur d'adhésion, enfin un système de vulcanisation (soufre, accélérateur, ZnO).

Les tissus composites renforcés par ces câbles comportent une matrice de caoutchouc formée de deux couches fines de gomme qui sont superposées de part et d'autre des câbles et qui présentent respectivement une épaisseur de 0,5 mm (câble C-I) ou de 0,8 mm (câble C-II). Le pas de calandrage (pas de pose des câbles dans le tissu de caoutchouc) est de 1,3 mm (câble C-I) ou de 2,8 mm (câble C-II).

On réalise ensuite deux séries d'essais de roulage de pneumatiques Poids-lourd (notées P-I et P-II) de dimensions 11R22.5 XZE, avec dans chaque série des pneumatiques destinés au roulage, d'autres à un décorticage sur pneumatique neuf.

Les pneus P-I renforcés par les câbles C-I de l'invention sont les pneumatiques conformes à l'invention. Les pneumatiques P-II renforcés par les câbles C-II constituent les pneus témoins de l'art antérieur ; ils constituent, en raison de leurs performances reconnues, un témoin de choix pour cet essai.

Les pneumatiques P-I et P-II sont donc identiques à l'exception des câbles à deux couches qui renforcent leur ceinture 6.

Leur armature de sommet ou ceinture 6, en particulier, est de manière connue en soi constituée de deux demi-nappes de triangulation renforcées de câbles métalliques inclinés de 65 degrés, surmontées de deux "nappes de travail" superposées croisées. Ces nappes de travail sont renforcées des câbles métalliques ci-dessus (respectivement C-I et C-II) disposés sensiblement parallèlement les uns par rapport aux autres et inclinés de 26 degrés (nappe radialement interne) et 18 degrés (nappe radialement externe). Les deux nappes de travail sont par ailleurs recouvertes par une nappe de protection renforcée de câbles métalliques élastiques (haute élongation) conventionnels inclinés de 18 degrés. Tous les angles d'inclinaison indiqués sont mesurés par rapport au plan circonférentiel médian.

On fait subir à ces pneumatiques un essai de roulage sévère, en surcharge, destiné à tester leur résistance au phénomène dit de "clivage" (séparation des extrémités des nappes de ceinture), en soumettant les pneumatiques (sur une machine de roulage automatique) à des séquences de très forte dérive et mise en compression sévère de leur bloc sommet dans la zone d'épaule. Le test est conduit jusqu'à la destruction forcée des pneumatiques.

On constate alors que les pneumatiques P-I renforcés par les câbles de l'invention, dans les conditions très sévères de roulage qui leur sont imposées, présentent une endurance nettement améliorée : la distance moyenne parcourue est augmentée de 35% par rapport aux pneumatiques témoins montrant déjà par ailleurs une performance excellente.

Les câbles C-I et C-II non fatigués, après extraction hors des pneumatiques neufs, ont été par ailleurs soumis au test de perméabilité à l'air décrit au paragraphe I-1, en mesurant le volume d'air (en cm³) traversant les câbles en 1 minute (moyenne de 10 mesures).

Le tableau 3 ci-dessous présente les résultats obtenus, en terme de débit moyen d'air (moyenne sur 10 mesures - en unités relatives base 100 sur les câbles témoins) et de nombre de mesures correspondant à un débit d'air nul.

**Tableau 3**

| Câble | Débit moyen d'air (unités relatives) | Nombre de mesures à débit nul : |
|---|---|---|
| C-I | 0 | 100/100 |
| C-II | 100 | 30/100 |

Le câble C-I de l'invention est celui qui, de loin, présente la perméabilité à l'air la plus faible, puisque quasi nulle (débit moyen d'air nul ou pratiquement nul) et par conséquent le taux de pénétration par le caoutchouc le plus élevé, compte tenu de sa construction spécifique et de son gommage in situ.
Enfin, des tests d'adhésion ont montré une résistance notablement améliorée à la corrosion, avec des gains pouvant atteindre 100 à 150% sur les câbles C-I de l'invention, comparés aux câbles témoins C-II.
En conclusion, les câbles de l'invention permettent d'améliorer de manière notable la résistance à la fatigue et/ou corrosion sous compression, en particulier la résistance aux phénomènes de clivage dans les ceintures des pneumatiques Poids-lourd.
Bien entendu, l'invention n'est pas limitée aux exemples de réalisation précédemment décrits.
C'est ainsi par exemple que l'âme du câble de l'invention pourrait être constituée d'un fil à section non circulaire, par exemple déformé plastiquement, notamment un fil de section sensiblement ovale ou polygonale, par exemple triangulaire, carrée ou encore rectangulaire.
Pour des raisons de faisabilité industrielle, de coût et de performance globale, on préfère toutefois mettre en oeuvre l'invention avec un seul fil d'âme linéaire conventionnel c'est-à-dire de section circulaire.
L'âme C0 pourrait aussi être constituée d'un fil préformé, de section circulaire ou non, par exemple un fil ondulé, vrillé, tordu en forme d'hélice ou en zig-zag. Dans de tels cas, il faut bien sûr comprendre que le diamètre d₁ de l'âme représente le diamètre du cylindre de révolution imaginaire qui entoure le fil d'âme (diamètre d'encombrement), et non plus le diamètre (ou toute autre taille transversale, si sa section n'est pas circulaire) du fil d'âme lui-même.

L'invention concerne tout câble d'acier multi-torons ("*multi-strand rope*") dont la structure incorpore au moins, en tant que toron élémentaire, un câble à couches conforme à l'invention.

## Revendications

1. Câble d'acier multi-torons comprenant une structure incorporant au moins, en tant que toron élémentaire, un câble en acier compact à deux couches (C1, C2) de construction 1+N, gommé in situ, comportant un noyau ou couche interne (C1) comportant un fil d'âme unique de diamètre d₁, et une couche externe (C2) saturée de N fils de diamètre d₂ enroulés ensemble en hélice selon un pas p₂ autour de la couche interne (C1), ledit câble à couches étant **caractérisé :**
**en ce qu'**il présente les caractéristiques suivantes (d₁, d₂, p₂ en mm) :
- 0,15 <d₁ < 0,50;
- 0,15 < d₂ < 0,50;
- 8 < p₂ < 25 ;
et **en ce que** le fil d'âme est entouré d'une gaine de caoutchouc diénique qui remplit, au moins en partie, les interstices entre le fil d'âme et les fils de la couche externe (C2).

2. Câble d'acier multi-torons selon la revendication 1, l'élastomère diénique de la gaine de caoutchouc étant choisi dans le groupe constitué par les polybutadiènes, le caoutchouc naturel, les polyisoprènes de synthèse, les copolymères de butadiène, les copolymères d'isoprène, et les mélanges de ces élastomères.

3. Câble d'acier multi-torons selon l'une quelconque des revendications précédentes, présentant les caractéristiques suivantes (d₁, d₂ en mm) :
- 0,15 <d₁ < 0,50;
- 0,25 < d₂ < 0,40 ;
- 0,6 < (d₁ / d₂) < 1,25.

4. Câble d'acier multi-torons selon la revendication précédente, présentant les caractéristiques suivantes (d₁, d2 en mm) :
- 0,20 < d₁ < 0,48 ;
- 0,25 < d₂ < 0,40 ;
- 0,8 < (d₁ / d₂) < 1,2.

5. Câble d'acier multi-torons selon l'une quelconque des revendications précédentes, p2 étant compris entre 10 et 20 mm.

6. Câble d'acier multi-torons selon la revendication précédente, p₂ étant compris dans un domaine de 14 à 18 mm.

7. Câble d'acier multi-torons selon l'une quelconque des revendications précédentes, la couche externe (C2) comportant cinq à dix fils.

8. Câble d'acier multi-torons selon la revendication précédente, la couche externe (C2) comportant six ou sept fils.

9. Câble d'acier multi-torons selon la revendication précédente, la couche externe (C2) comportant six fils.

10. Câble d'acier multi-torons selon l'une quelconque des revendications précédentes, la gaine de caoutchouc entourant le fil d'âme présentant une épaisseur minimale comprise entre 0,01 et 0,10 mm.

11. Câble d'acier multi-torons selon la revendication précédente, la gaine de caoutchouc entourant le fil d'âme présentant une épaisseur minimale comprise dans un domaine de 0,02 à 0,06 mm.

12. Câble d'acier multi-torons selon l'une quelconque des revendications précédente, dans lequel d₁ = d₂.

13. Pneumatique renforcé d'un câble d'acier multi-torons selon l'une quelconque des revendications précédentes.

14. Pneumatique selon la revendication précédente, comportant une armature de carcasse qui est ancrée dans deux bourrelets et qui est surmontée radialement par une ceinture elle-même surmontée d'une bande de roulement qui est réunie auxdits bourrelets par deux flancs, **caractérisé en ce que** ladite ceinture comporte un câble d'acier multi-torons selon l'une quelconque des revendications 1 à 12.

## Patentansprüche

1. Mehradriges Stahlseil, das eine Struktur aufweist, die als elementare Ader wenigstens ein kompaktes Stahlseil mit zwei Aufbauschichten (C1, C2) 1 + N, das vor Ort gummiert wird, enthält, das einen Kern oder eine innere Schicht (C1), der bzw. die einen einzigen Kerndraht mit Durchmesser d₁ aufweist, und eine gesättigte äußere Schicht (C2) aus N Drähten mit Durchmesser d₂, die gemeinsam mit einer Steigung p₂ um die innere Schicht (C1) schraubenlinienförmig gewickelt sind, umfasst, wobei das Schichtseil **dadurch gekennzeichnet ist:**
**dass** es die folgenden Eigenschaften aufweist (d₁, d₂, p₂ in mm) :
- 0,15 < d₁ < 0,50;
- 0,15 < d₂ < 0,50;
- 8 < p₂ < 25;
und **dass** der Kerndraht von einer Dienkautschuk-Hülle umgeben ist, die wenigstens teilweise die Zwischenräume zwischen dem Kerndraht und den Drähten der äußeren Schicht (C2) füllt.

2. Mehradriges Stahlseil nach Anspruch 1, wobei das Dien-Elastomer der Kautschukhülle aus der Gruppe gewählt ist, die aus Polybutadien, natürlichem Kautschuk, synthetischem Polyisopren, Butadien-Copolymer, Isopren-Copolymer und Gemischen dieser Elastomere gebildet ist.

3. Mehradriges Stahlseil nach einem der vorhergehenden Ansprüche, das die folgenden Eigenschaften aufweist: (d₁, d₂ in mm) :
- 0,15 < d₁ < 0,50;
- 0,25 < d₂ < 0,40;
- 0, 6 < (d₁/d₂) < 1,25.

4. Mehradriges Stahlseil nach dem vorhergehenden Anspruch, das die folgenden Eigenschaften aufweist (d₁, d₂ in mm) :
- 0,20 < d₁ < 0,48;
- 0,25 < d₂ < 0,40;
- 0,8 < (d₁/d₂) < 1,2.

5. Mehradriges Stahlseil nach einem der vorhergehenden Ansprüche, wobei p₂ im Bereich von 10 bis 20 mm liegt.

6. Mehradriges Stahlseil nach dem vorhergehenden Anspruch, wobei p₂ im Bereich von 14 bis 18 mm liegt.

7. Mehradriges Stahlseil nach einem der vorhergehenden Ansprüche, wobei die äußere Schicht (C2) fünf bis zehn Drähte umfasst.

8. Mehradriges Stahlseil nach dem vorhergehenden Anspruch, wobei die äußere Schicht (C2) sechs oder sieben Drähte umfasst.

9. Mehradriges Stahlseil nach dem vorhergehenden Anspruch, wobei die äußere Schicht (C2) sechs Drähte umfasst.

10. Mehradriges Stahlseil nach einem der vorhergehenden Ansprüche, wobei die Kautschukhülle, die den Kerndraht umgibt, eine minimale Dicke im Bereich von 0,01 bis 0,10 mm aufweist.

11. Mehradriges Stahlseil nach dem vorhergehenden Anspruch, wobei die Kautschukhülle, die den Kerndraht umgibt, eine minimale Dicke im Bereich von 0,02 bis 0,06 mm aufweist.

12. Mehradriges Stahlseil nach einem der vorhergehenden Ansprüche, wobei d₁ = d₂.

13. Luftreifen, der durch ein mehradriges Stahlseil nach einem der vorhergehenden Ansprüche verstärkt ist.

14. Luftreifen nach dem vorhergehenden Anspruch, der eine Karkassenbewehrung umfasst, die in zwei Wulsten verankert ist und auf der radial ein Gürtel montiert ist, auf dem seinerseits eine Laufbahn montiert ist, die mit den Wulsten über zwei Seitenflächen verbunden ist, **dadurch gekennzeichnet, dass** der Gürtel ein mehradriges Stahlseil nach einem der Ansprüche 1 bis 12 umfasst.

## Claims

1. A compact metal cable having two layers (C1, C2) of construction 1+N, rubberised in situ, comprising a core or inner layer (C1) comprising a single core wire of diameter d₁, and a saturated outer layer (C2) of N wires of diameter d₂ wound together in a helix at a pitch p₂ around the layer C1, said layered cable being **characterised:**
- **in that** it has the following characteristics (d₁, d₂, p₂ in mm):
- 0.15 <d₁ < 0.50;
- 0.15 < d₂ < 0.50;
- 8 < p₂ < 25;
- and **in that** the core wire is surrounded by a sheath of diene rubber which fills, at least in part, the gaps between the core wire and the wires of the layer C2.

2. A cable according to Claim 1, the diene elastomer of the rubber sheath being selected from the group consisting of polybutadienes, natural rubber, synthetic polyisoprenes, butadiene copolymers, isoprene copolymers and mixtures of these elastomers.

3. A cable according to any one of the preceding claims, having the following characteristics (d₁, d₂ in mm):
- 0.15 < d₁ < 0.50;
- 0.25 < d₂ < 0.40;
- 0.6 < (d₁ / d₂) < 1.25.

4. A cable according to the preceding Claim, having the following characteristics (d₁, d₂ in mm):
- 0.20 < d₁ < 0.48;
- 0.25 < d₂ < 0.40;
- 0.8 < (d₁ / d₂) < 1.2.

5. A cable according to any one of the preceding claims, p₂ being between 10 and 20 mm.

6. A cable according to the preceding Claim, p₂ being within a range from 14 to 18 mm.

7. A cable according to any one of the preceding claims, the outer layer (C2) comprising five to ten wires.

8. A cable according to the preceding Claim, the outer layer (C2) comprising six or seven wires.

9. A cable according to the preceding Claim, the outer layer C2 comprising six wires.

10. A cable according to any one of the preceding claims, the rubber sheath surrounding the core wire having a minimal thickness of between 0.01 mm and 0.10 mm.

11. A cable according to the preceding Claim, the rubber sheath surrounding the core wire having a minimal thickness within a range from 0.02 mm to 0.06 mm.

12. A cable according to one of the preceding claims, in which d₁ = d₂.

13. A tyre reinforced with a cable according to any one of the preceding claims.

14. A tyre according to the preceding Claim, comprising a carcass reinforcement which is anchored in two beads and which is radially surmounted by a belt which in turn is surmounted by a tread which is joined to said beads by two sidewalls, **characterised in that** said belt comprises a metal cable according to any one of the claims 1 to 12.
